# EUROPEAN PATENT SPECIFICATION

(11) **EP 4 033 295 B1**
(45) Date of publication and mention of the grant of the patent: **06.11.2024**
(21) Application number: 21217162.3
(22) Date of filing: 22.12.2021
(51) Int. Cl.: G02F 1/1335, E03C 1/05, G02F 1/1333

(54) **DIGITAL SHOWER CONTROLLER FOR A SHOWER**
DIGITALE DUSCHSTEUERUNG FÜR EINE DUSCHE
CONTROLEUR DE DOUCHE NUMERIQUE POUR UNE DOUCHE

(30) Priority: 20.01.2021 US 202117153346
(43) Date of publication of application: 27.07.2022
(73) Proprietor: Kohler Mira Limited, Cheltenham, Gloucestershire GL52 5EP (GB)
(72) Inventor: ESTIBAN, Marwan, Kohler, 53044 (US); KOYALA, Govinda Rao, Kohler, 53044 (US); PODURU, Krishna C, Kohler, 53044 (US); MEAD, Richard, Cheltenham, GL52 5EP (GB); MAY, Adam, Cheltenham, GL52 5EP (GB)
(74) Representative: Barker Brettell LLP

(56) References cited:
- EP-A1- 2 910 694
- EP-A2- 1 970 479
- JP-A- 2003 248 434
- US-A1- 2006 202 942

## Description

### BACKGROUND

The present invention relates to a digital shower controller. The invention also relates to a shower comprising such a controller, and a method of manufacturing a digital shower controller.

Controllers for use in ablutionary settings include, for example, digital shower controllers. A digital shower controller typically comprises a manually operated mechanical input portion used to actuate an electronic switch. The electronic switch forms part of a control circuit which is typically used to control one or more characteristics of water delivered by a shower. For instance, the electronic switch may form part of a control circuit used to control actuation of an electronic valve, e.g. a solenoid valve. The electronic valve in turn may control the supply of water to a showerhead in response to actuation of the electronic switch. Parts of the mechanical input portion may wear over time, and the mechanical input portion may become difficult to use due to the build-up of debris between moving parts. The number of different inputs provided by the mechanical input portion is also fixed and the inputs cannot be easily modified.

It is known to provide a digital shower controller with an electronic display for indicating to a user various functions being performed by the controller. For example, the display may indicate a target water temperature which the controller will deliver through control of the electronic valve. Such displays typically reflect light when inactive, meaning that dirt located on the surface of the display is visible. In addition, the edges of the display may be visible relative to the surrounding housing of the controller. These effects result in an undesirable appearance.
EP2910694A1 discloses a shower control system including a controller in communication with a plurality of output devices located within a shower enclosure. The controller is configured to control the plurality of output devices. The shower control system further includes a control panel in communication with the controller and configured to provide a graphical user interface for controlling the plurality of output devices. The control panel includes an electronic display configured to present dynamic content, one or more static buttons, and a touch-sensitive panel overlaying both the electronic display and the one or more static buttons. The touch-sensitive panel is configured to detect a user interaction with both the one or more static buttons and the dynamic content presented via the electronic display. Output from the output devices is dependent on the respective device being selected as well as being activated by the user.
EP1970479A2 discloses a control panel and a washing machine, capable of providing an aesthetic external appearance and preventing characters or symbols which indicate control functions from being erased and preventing the characters or symbols from being displayed when the operation stops or the control functions are not used. The control panel includes a semi-transparent cover, a film disposed behind the semi-transparent cover and printed with a plurality of characters or symbols, a detecting panel disposed behind the film and having a plurality of detecting members detecting a capacitance of a human body, a circuit board having a light emitting unit irradiating light onto the film to display the characters or the symbols of the film on a rear surface of the semi-transparent cover, and a guide member having a plurality of optical paths guiding light irradiated from the light emitting unit into each of the characters or the symbols of the film.
JP2003248434A discloses a display device with a sheet type half mirror so arranged as to cover a face (a display screen) of a liquid crystal display panel and a backlight arranged on the other side. The half mirror transmits the light emitted from the backlight and reflects the incident light from the outside
US2006202942A1 discloses a liquid crystal display (LCD) and logic for controlling the LCD to selectively operate in one of two alternative states. The two states include a first state in which the LCD operates in a conventional manner to display visible data to a user, and a second state in which the LCD effectively functions as a mirror.

### SUMMARY

A first aspect of the invention relates to a digital shower controller as set out in independent claim 1 of the appended claims.

A second aspect of the invention relates to a shower as set out in dependent claim 12 of the appended claims.

A third aspect of the invention relates to a method of manufacturing a digital shower controller as set out in independent claim 14 of the appended claims.
Embodiments of the invention are set out in the appended dependent claims.

### BRIEF DESCRIPTION OF THE DRAWINGS

Various embodiments will now be described, by way of example only, with reference to the accompanying drawings:
Figure 1 shows a schematic cross-sectional side view of a controller according to an example helpful to understand the invention but not covered by the claims;
Figure 2 shows a schematic cross-sectional side view of a controller according to another example helpful to understand the invention but not covered by the claims;
Figure 3 shows a schematic cross-sectional side view of a controller;
Figure 4 shows a schematic front view of a controller;
Figure 5 illustrates schematically a fluid delivery system;
Figure 6 illustrates a method according to an example helpful to understand the invention but not covered by the claims;
Figure 7 illustrates a method according to an embodiment of the claimed invention; and
Figures 8a-f show a schematic representation of a method according to an embodiment of the claimed invention.

### DETAILED DESCRIPTION

According to a first example, there is provided a controller for use in a wet environment such as an ablutionary setting. In embodiments of the claimed invention, the controller is a digital shower controller. The controller comprises a display for displaying information related to the operation of a fluid delivery system. In embodiments of the invention, the display is configured to display information related to the operation of a shower. The display comprises a light source, a semi-transparent layer, and a touch interface configured to provide an input to the controller. The light source and the semi-transparent layer are configured such that the semi-transparent layer absorbs or reflects light transmitted towards the light source and allows light transmitted from the light source to be transmitted from the display, such that the light source appears hidden when light is not transmitted from the light source.

The dual functionality of the display, i.e. displaying information and providing an input to the controller, may remove the requirement for additional components.

The touch interface may comprise any suitable means for providing an input to the controller in response to a touching motion performed by a user of the controller. The touching motion may comprise direct or indirect physical contact, for example between a user's finger and the touch interface. In other examples, the touching motion may comprise a user moving their finger in proximity with the touch interface without the need for physical contact. For example, the touching motion may comprise a user moving their finger to a predetermined distance from the touch interface. For example, the predetermined distance may be at least 1mm and/or up to 10mm, or at least 1mm and/or up to 5mm, or at least 5mm and/or up to 10mm. The touch interface may comprise any suitable touch interface, for example one or more of a capacitive touch interface, a resistive touch interface, a surface acoustic wave interface, or an infrared interface.

The touch interface may be a physical touch interface layer. For example, where the touch interface comprises a capacitive touch interface or a resistive touch interface, the touch interface may be a physical touch interface layer and the touching motion described above may comprise direct physical contact between a user's finger, for example, and the physical touch interface layer. Alternatively, the touch interface may not be a physical touch interface layer. For example, where the touch interface comprises a surface acoustic wave interface, the touch interface may be a layer of ultrasonic waves. In another example, where the touch interface comprises an infrared interface, the touch interface may be a layer of infrared light.

The touch interface may be at least partially transparent. The touch interface may be semi-transparent or transparent.

The touch interface may be formed separately from the semi-transparent layer. The touch interface may be arranged between the light source and the semi-transparent layer, or the semi-transparent layer may be arranged between the light source and the touch interface. The touch interface and the light source may at least partially overlap as viewed in a direction perpendicular to the front of the controller.

The touch interface may not be arranged between the light source and the semi-transparent layer, or the semi-transparent layer may not be arranged between the light source and the touch interface. The touch interface may be spaced from the light source in a direction parallel to the front of the controller, such that the touch interface and the light source do not overlap. For example, the touch interface may be spaced from the light source in a direction parallel to the front of the controller such that the touch interface is spaced to the side of the light source.

The semi-transparent layer may be integrally formed with the touch interface. For example, where the touch interface is a physical touch interface layer, the physical touch interface layer may be treated or otherwise processed such that the touch interface provides the semi-transparent layer. In another example, where the touch interface is a physical touch interface layer, the semi-transparent layer may be first formed separately from the physical touch interface layer before being formed integrally with the physical touch interface layer, for example using an in-mold labelling (IML) process. The semi-transparent layer may be otherwise suitably printed on or bonded to the physical touch interface layer or *vice versa.*

One or more of the opacity of the semi-transparent layer, the intensity of light transmitted by the light source, and a maximum distance between the light source and the semi-transparent layer may be selected such that the semi-transparent layer absorbs or reflects light transmitted towards the light source and allows light transmitted from the light source to be transmitted from the display, such that the light source appears hidden when light is not transmitted from the light source. One or more of the opacity of the semi-transparent layer, the intensity of light transmitted by the light source, and a maximum distance between the light source and the semi-transparent layer may be selected in dependence on an intensity of light transmitted towards the light source in use, such as ambient indoor lighting.

Ambient indoor lighting herein refers, for example, to light produced by a typical domestic ambient light source, such as an LED, CFL or halogen light bulb, within a typical domestic setting, such as an ablutionary setting (a bathroom for example). Such typical domestic light sources may emit light with an output in the range of 4-130 Watts. In use, the distance between the semi-transparent layer of the display and an ambient light source may be greater than 1 meter, greater than 2 meters, or greater than 5 meters, for example. The intensity of ambient indoor lighting measured at the semi-transparent layer typically may be in the range of 0.001-15 Wm⁻² (Watts per meters squared), for example.

The semi-transparent layer may have an opacity selected such that light transmitted towards the light source in use, for example ambient indoor lighting, is reflected or absorbed by the semi-transparent layer and light transmitted from the light source is transmitted through the semi-transparent layer. The semi-transparent layer may have an opacity selected in dependence on one or more of: the intensity of light transmitted towards the light source in use, for example ambient indoor lighting, as measured at the semi-transparent layer; the intensity of light transmitted by the light source as measured at the semi-transparent layer; and a maximum distance between the light source and the semi-transparent layer; such that the semi-transparent layer absorbs or reflects light transmitted towards the light source and allows light transmitted from the light source to be transmitted from the display, such that the light source appears hidden when light is not transmitted from the light source.

The light source may be configured to transmit light having an intensity measured at the semi-transparent layer greater than an intensity of light transmitted towards the light source in use, for example ambient indoor lighting, measured at the semi-transparent layer. The output of light transmitted by the light source may be in the range of 4-24 W, for example. The intensity of light transmitted by the light source measured at the semi-transparent layer may be at least 3 kWm⁻² and/or up to 2 MWm⁻², for example. Therefore, due to the relative distances of the ambient light source and the light source of the display from the semi-transparent layer, the intensity of light from the light source of the display measured at the semi-transparent layer may be orders of magnitude greater than the intensity of light from the ambient light source measured at the semi-transparent layer.

The intensity of light transmitted by the light source may be selected in dependence on one or more of: the intensity of light transmitted towards the light source in use, for example ambient indoor lighting; the opacity of the semi-transparent layer; and a maximum distance between the light source and the semi-transparent layer; such that the semi-transparent layer absorbs or reflects light transmitted towards the light source and allows light transmitted from the light source to be transmitted from the display, such that the light source appears hidden when light is not transmitted from the light source.

A maximum distance between the light source and the semi-transparent layer may be selected such that light emitted by the light source, in use, is transmitted through the semi-transparent layer. A maximum distance between the light source and the semi-transparent layer may be less than 10 mm, less than 5 mm, less than 4 mm, less than 3 mm, less than 2 mm, or less than 1 mm, for example. A maximum distance between the light source and the semi-transparent layer may be approximately 0 mm, for example, i.e. if the light source and the semi-transparent layer are in contact with one another across an entire surface area of a contacting surface of the light source and the semi-transparent layer. The maximum distance between the light source and the semi-transparent layer may be selected in dependence on one or more of: the intensity of light transmitted towards the light source in use, for example ambient indoor lighting; the intensity of light transmitted by the light source; and the opacity of the semi-transparent layer; such that the semi-transparent layer absorbs or reflects light transmitted towards the light source and allows light transmitted from the light source to be transmitted from the display, such that the light source appears hidden when light is not transmitted from the light source.

Advantageously, when the light source is not turned on, the edges or outline of the light source or any part thereof will not be visible under ambient lighting conditions. The light source appearing hidden when information is not displayed (i.e. when the light source is not turned on) reduces the visibility of any dirt located on the display. In addition, it enables the light source to appear continuous with the surroundings of the display. This advantageously improves the aesthetic appearance of the controller over known controllers which have a display which is not hidden when information is not being displayed.

The semi-transparent layer may cover a major portion of the light source. The semi-transparent layer may cover substantially all of the light source.

The touch interface may comprise a capacitive touch interface. The capacitive touch interface may comprise an indium tin oxide layer. The display may further comprise a conductive protective layer arranged over the top of the capacitive touch interface. In examples in which the capacitive touch interface is arranged between the light source and the semi-transparent layer, the semi-transparent layer may additionally function as a protective layer. In such examples, the semi-transparent layer may be electrically conductive to ensure full functionality of the capacitive touch interface.

The controller may further comprise a processor and a memory device. The memory device may comprise instructions which, when executed by the processor, perform the function of compensating for the presence of water droplets or other debris in contact with the display. In some examples, for example wherein the touch interface comprises a capacitive touch interface, the presence of debris in contact with the display may interfere with providing an input to the controller in response to a touching motion performed by a user of the controller. Compensating for the presence of debris in contact with the display may comprise differentiating between debris in contact with the display and a touching motion performed by the user.

In some examples, including embodiments of the claimed invention, the display further comprises a transparent layer. The transparent layer may be arranged between the light source and the touch interface, or between the touch interface and the semi-transparent layer, or between the light source and the semi-transparent layer. The transparent layer may be used to provide a maximum distance between the light source and the semi-transparent layer, the maximum distance being selected such that light emitted by the light source, in use, is transmitted through the semi-transparent layer. Providing the maximum distance using the transparent layer instead of providing a gap between the light source and the touch interface, or between the touch interface and the semi-transparent layer, or between the light source and the semi-transparent layer may help to maintain the structural integrity of the display.

The transparent layer may comprise, or consist essentially of, a polymeric material, in particular a plastics material. Suitable materials may include a co-polyester variant, polycarbonate or poly methyl methacrylate (PMMA).

The transparent layer may comprise a concave formation. The transparent layer may be curved at least in part. For instance, an outer surface of the transparent layer may be convex.

The transparent layer may have a minimum thickness of at least 1 mm or at least 2 mm. The transparent layer may have a maximum thickness of up to 5 mm or up to 10 mm.

In some examples, including embodiments of the claimed invention, the semi-transparent layer is disposed on a surface of the transparent layer by any suitable means.

The semi-transparent layer may be thinner than the transparent layer. The semi-transparent layer may have a substantially uniform thickness. The semi-transparent layer may have a thickness of up to or at least 0.1 mm or up to 0.2 mm.

The semi-transparent layer of any of the above described examples may be black or white. A black semi-transparent layer may improve the legibility of information displayed by the light source, whereas a white semi-transparent layer may be better suited to environments in which the intensity of the ambient lighting is greater. The semi-transparent layer may be any suitable color. Lighter colors in general will reflect more ambient lighting than they absorb, and darker colors in general will absorb more ambient lighting than they reflect. The color of the semi-transparent layer may be selected depending on the intensity of ambient lighting measured at the semi-transparent layer and/or to produce a desired aesthetic appearance.

A shape of a continuous outer edge of the semi-transparent layer as viewed in a direction extending from the semi-transparent layer toward the light source may be different to a shape of a continuous outer edge of the light source as viewed in the same direction. The light source may be rectangular, e.g. square, and one or both of the semi-transparent layer and the transparent layer may not be rectangular, e.g. square. In some examples, the shape of the light source may be any other shape that is different from the shape of the transparent layer and/or the semi-transparent layer. In some examples, the shapes of the light source, transparent layer and semi-transparent layer may all be different.

The configuration of the light source and the semi-transparent layer hides the edges of the light source, both when information is displayed by the light source and when information is not displayed. As such, the shape of the display as a whole takes the appearance of the shape of the semi-transparent layer and/or the transparent layer. The light source may comprise an electronic screen, and rectangular, e.g. square, electronic screens are typically cheaper than round electronic screens, for example. The combination of a round semi-transparent layer and/or transparent layer may therefore allow for a rectangular, e.g. square, electronic screen to be used while the appearance of the display as a whole is round.

The touch interface of any of the above described embodiments may comprise a resistive touch interface. A resistive touch interface may be advantageous in certain environments. In embodiments wherein the touch interface comprises a resistive touch interface, the presence of debris in contact with the display may be less likely to interfere with providing an input to the controller in response to a touching motion performed by a user of the controller.

The touch interface of any of the above described embodiments may comprise a surface acoustic wave interface or an infrared interface.

The light source may comprise an electronic screen. The electronic screen may comprise a liquid-crystal display. The liquid-crystal display may comprise a thin-film-transistor (TFT) liquid-crystal display. The light source may comprise one or more LEDs behind the liquid-crystal display to provide backlighting. The light source may comprise an LED screen.

The light source may comprise an LED. The light source may comprise an array of LEDs. One or more LEDs used to display information may be more suitable than an electronic screen in certain applications. LEDs in general require less power than electronic screens and so may be more suited to embodiments in which the controller is battery powered, for example.

The controller may be battery powered or may be configured to be powered by mains electricity.

According to another example, there is provided a fluid delivery system comprising the controller of any of the above described embodiments.

According to another example, there is provided a fluid delivery system comprising a fluid delivery device and the controller of any of the above described embodiments. The controller is operable to control one or more characteristics of the fluid delivered, in use, by the fluid delivery device.

The one or more characteristics of the fluid may comprise fluid flow and/or temperature.

The fluid delivery system may comprise a valve operable to control flow of fluid to the fluid delivery device and the controller may be operably connected to the valve.

The fluid delivery system may comprise a plurality of fluid delivery devices.

The controller may be configured to permit a user to select any combination of one or more of the fluid delivery devices.

The fluid delivery device(s) may comprise a sprayer, e.g. a shower head.

The fluid may be water.

The system may be coupled to a fluid supply, e.g. a plumbing system providing cold and/or hot water.

According to another example, there is provided a method of manufacturing a controller for use in a wet environment such as an ablutionary setting, the controller comprising a display for displaying information related to the operation of a fluid delivery system and for providing an input to the controller. The display comprises a light source, a semi-transparent layer, and a touch interface. The method comprises providing a light source, a semi-transparent layer, and a touch interface. The method comprises providing a light source, a semi-transparent layer, and a touch interface. The method further comprises configuring the light source and the semi-transparent layer such that the semi-transparent layer absorbs or reflects light transmitted towards the light source and allows light transmitted from the light source to be transmitted from the display, such that the light source appears hidden when light is not transmitted from the light source.

The method may comprise arranging the touch interface between the light source and the semi-transparent layer, or arranging the semi-transparent layer between the light source and the touch interface.

In some examples, including embodiments of the invention, the display further comprises a transparent layer. In some examples, including embodiments of the invention, the method further comprises providing a transparent layer and forming the semi-transparent layer integrally with the transparent layer.

The method may comprise applying the semi-transparent layer to the transparent layer using an in-mold labelling (IML) process. The method may comprise: inserting the semi-transparent layer in to a mold; injecting molten material in to the mold to form the transparent layer; and removing the transparent layer and the semi-transparent layer from the mold as a single piece.

The method may comprise forming the transparent layer using any suitable process, such as a plastic forming process, e.g. injection molding, or an additive manufacturing process.

In some examples, including embodiments of the invention, the semi-transparent layer is formed integrally with the transparent layer. The semi-transparent layer may be applied to the transparent layer by any suitable process, such as inkjet printing, laser printing, painting or adhesion.

Except where mutually exclusive, any of the features of any of the above described aspects may be employed *mutatis mutandis* in any of the other above described aspects.

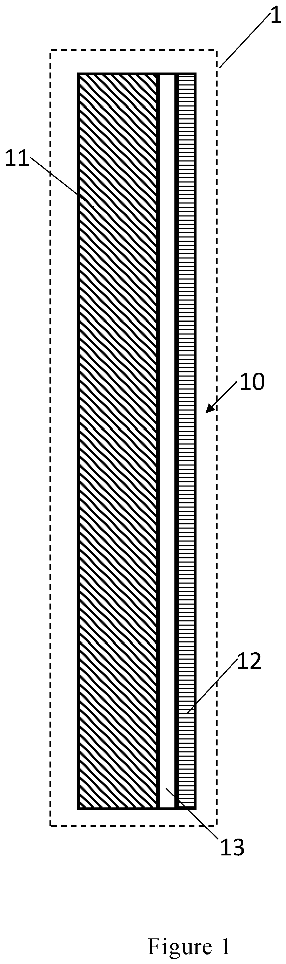

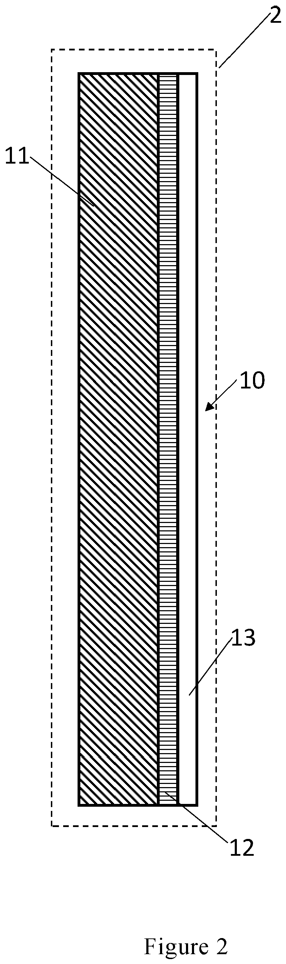

Figure 1 shows a schematic cross-sectional side view of a controller 1, for use in a wet environment such as an ablutionary setting, according to an example helpful to understand the invention but not covered by the claims. Figure 2 shows a schematic cross-sectional side view of a controller 2, for use in a wet environment such as an ablutionary setting, according to another example helpful to understand the invention but not covered by the claims. The controller 1 of Figure 1 and the controller 2 of Figure 2 have features in common and like reference numerals will be used to refer to like features. Figures 1 and 2 are merely illustrative and are not indicative of the relative sizes of the components or of the relative spacing between components of the respective controller 1, 2. Each controller 1, 2 comprises a display 10 for displaying information related to the operation of a fluid delivery system. The display 10 comprises a light source 11, a semi-transparent layer 12, and a touch interface 13 configured to provide an input to the controller 1, 2. The light source 11 and the semi-transparent layer 12 are configured such that the semi-transparent layer 12 absorbs or reflects light transmitted towards the light source 11 and allows light transmitted from the light source 11 to be transmitted from the display 10, such that the light source 11 appears hidden when light is not transmitted from the light source 11.

The semi-transparent layer 12 does not substantially allow light to be transmitted to the light source 11 when light is not transmitted from the light source 11. As such, substantially no light is reflected by the light source 11 when light is not transmitted from the light source 11. In certain examples, the light source 11 may comprise an electronic light source, such as an electronic screen or an LED. Light may not be transmitted from the light source 11 when the light source 11 is inactive, for example when there is no power being supplied to the light source 11. When light is transmitted from the light source 11, for example when power is provided to the light source 11, light is transmitted from the light source 11, and through the semi-transparent layer 12, allowing information represented by the light source 11 to be visible to a user.

The effect described in the preceding paragraph may be primarily achieved by selecting: the opacity of the semi-transparent layer 12; the intensity of light transmitted by the light source 11; and a maximum distance between the light source 11 and the semi-transparent layer 12. One or more of these variables may be selected in dependence on a given intensity of light incident on the display 10 in use, e.g. the intensity of ambient indoor lighting. The range of intensity of ambient lighting within a typical ablutionary setting, such as a domestic bathroom, and therefore the range of intensity of light incident on the display 10 in use, is readily attainable. The opacity of the semi-transparent layer 12, the intensity of light transmitted by the light source 11, and a maximum distance between the light source 11 and the semi-transparent layer 12 may be selected in dependence on this range to achieve the effect described in the preceding paragraph.

Within a typical ablutionary setting, there may be provided ambient indoor lighting produced by a typical domestic ambient light source, such as an LED, CFL or halogen light bulb. The opacity of the semi-transparent layer 12 may be such that the ambient indoor lighting is reflected or absorbed by the semi-transparent layer 12 and light emitted by the light source 11 is transmitted through the semi-transparent layer 12. The light source 11 may be configured to transmit light having an intensity measured at the semi-transparent layer greater than an intensity of the ambient indoor lighting measured at the semi-transparent layer 12.

In the examples of Figures 1 and 2, both helpful to understand the invention but not covered by the claims, the touch interface 13 is a physical touch interface layer and the touch interface 13 is formed separately from the semi-transparent layer 12. In the example of Figure 1, the touch interface 13 is arranged between the light source 11 and the semi-transparent layer 12. In the example of Figure 2, the semi-transparent layer 12 is arranged between the light source 11 and the touch interface 13. The touch interface 13 and the light source 11 overlap as viewed in a direction perpendicular to the front of the controller 1, 2. In other examples, the touch interface 13 may not be arranged between the light source 11 and the semi-transparent layer 12, or the semi-transparent layer 12 may not be arranged between the light source 11 and the touch interface 13. The touch interface 13 may be spaced from the light source 11 in a direction parallel to the front of the controller 1, 2, such that the touch interface 13 and the light source 11 do not overlap. For example, the touch interface 13 may be spaced from the light source 11 in a direction parallel to the front of the controller 1, 2 such that the touch interface 13 is spaced to the side of the light source 11. In some examples, the semi-transparent layer 12 may be integrally formed with the touch interface 13.

In use, the display 10 may be configured to display information related to the operation of a fluid delivery system, for example a domestic shower. In some examples, the light source 11 may comprise an electronic screen, such as a liquid-crystal display (LCD) or an LED screen, configured to display information in the form of plain text and/or symbols. For example, the electronic screen may display a target water temperature to be delivered by the shower. In some examples, the light source 11 may comprise an LED or an array of LEDs. The LED or LEDs may be configured to display information by illuminating or not illuminating. For example, the LED or LEDs may illuminate when a target water temperature to be delivered by the shower has been reached.

The touch interface 13 may be configured to provide an input to the controller 1, 2. In use, the light source 11 may display one or more input options, for example in the form of one or more icons or symbols, or in the form of text. The touch interface 13 may be configured to allow a user to select each of the one or more input options through means of a touching motion in the proximity of the input option. The touching motion may comprise physical contact, for example between a user's finger and the touch interface. In other examples, the touching motion may comprise a user moving their finger in proximity with the touch interface without the need for physical contact. For example, a user may be able to select one of the input options by moving their finger to a predetermined distance from the touch interface in the proximity of the input option. The predetermined distance may be within the range of 1-10mm.

In some examples, the touch interface 13 may not necessarily be configured to allow a user to select each of one or more input options displayed by the light source 11 through means of a touching motion in the proximity of the input option. The light source 11 may be configured to display information related to the operation of a fluid delivery system and the touch interface 13 may be configured to provide an input to the controller 10 independently of the information displayed by the light source 11. In such examples, the touch interface 13 is spaced to the side of the light source 11 as viewed from the front of the controller 1, 2.

In some examples, the touch interface 13 may comprise a capacitive touch interface. The operation of a capacitive touch interface is known, and so will not be discussed in detail here. In short, a capacitive touch interface typically comprises an electrically conductive layer which produces an electrostatic field when power is supplied to the electrically conductive layer. When a user of the controller contacts the capacitive touch interface, either directly or via a second conductive layer provided over the top of the touch interface, the touch interface reacts to the static electrical capacity of the user. This results in a decrease in capacitance of the electrically conductive layer, which is detected by sensors forming part of the touch interface. The controller 1, 2 may be configured to interpret this change in capacitance as an input to the controller 1, 2. The controller 1, 2 may be configured to produce a control signal in dependence on the change in capacitance.

The presence of debris, such as dirt or water droplets, in contact with the display 10 may interfere with providing an input to the controller 1, 2 in response to a user contacting the capacitive touch interface. In some examples, the controller 1, 2 may comprise software configured to compensate for the presence of debris in contact with the display 10. Compensating for the presence of debris may comprise differentiating between debris in contact with the display and a touching motion performed by the user.

In practice, the touch interface may comprise any suitable touch interface. Examples of touch interfaces which could be used include: a resistive touch interface, a surface acoustic wave interface, or an infrared interface.

In the example of Figure 1, helpful to understand the invention but not covered by the claims, there are no gaps between the light source 11 and the touch interface 13, or between the touch interface 13 and the semi-transparent layer 12. In some examples, the light source 11, touch interface 13 and semi-transparent layer 12 may all be of uniform thickness (as viewed from the side as shown in Figure 1). The thickness of the touch interface 13 may be less than 10mm such that the distance between the light source 11 and the semi-transparent layer 12 is less than 10mm. In some examples, the thickness and the corresponding distance may be less than 5mm. In some examples, the light source 11 and the touch interface 13 and/or the touch interface 13 and the semi-transparent layer 12 may be spaced apart. In such examples, the light source 11 and the touch interface 13 and/or the touch interface 13 and the semi-transparent layer 12 may be spaced apart such that the distance between the light source 11 and the semi-transparent layer 12 is less than 10mm. In some examples, the distance may be less than 5mm.

In the embodiment of Figure 2, helpful to understand the invention but not covered by the claims, there are no gaps between the light source 11 and the semi-transparent layer 12. In other examples, the light source 11 and the semi-transparent layer 12 may be spaced apart. In some examples, the light source 11 and the semi-transparent layer 12 may both be of uniform thickness (as viewed from the side as viewed in Figure 2). The spacing, the distance between the light source 11 and the semi-transparent 12 layer may be selected such that light transmitted from the light source 11 is transmitted through the semi-transparent layer 12 for a given intensity of light transmitted by the light source 11.

In some examples, one of the light source 11 and the semi-transparent layer 12 may be curved relative to the other of the light source 11 and the semi-transparent layer 12. As such, the distance between the light source 11 and semi-transparent layer 12 may vary over the surface areas of the light source 11 and the semi-transparent layer 12. The maximum distance between the light source 11 and semi-transparent layer 12 is selected such that light emitted by the light source 11 is transmitted through the semi-transparent layer 12.

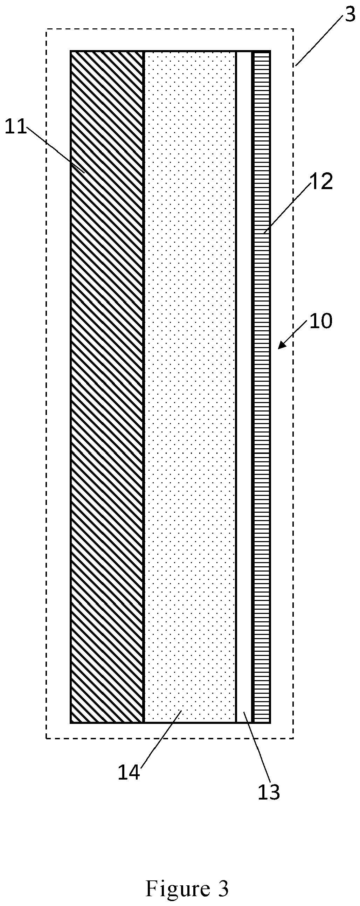

Figure 3 shows a schematic cross-sectional side view of a controller 3 for use in a wet environment such as an ablutionary setting. In embodiments of the claimed invention, the controller 3 is a digital shower controller. The controller 3 of Figure 3 has features in common with the controller 1 of Figure 1 and the controller 2 of Figure 2. Like reference numerals will be used to refer to like features. Figure 3 is merely illustrative and is not indicative of the relative sizes of the components or of the relative spacing between components of the controller 3.

The display 10 of the controller 3 of Figure 3 further comprises a transparent layer 14. In the embodiment of Figure 3, the transparent layer 14 is arranged between the light source 11 and the touch interface 13. In other embodiments, the transparent layer 14 may be arranged between the touch interface 13 and the semi-transparent layer 12, or between the light source 11 and the semi-transparent layer 12. The transparent layer 14 increases the distance between the light source 11 and the semi-transparent layer 12 compared to the controller 1 of Figure 1 and the controller 2 of Figure 2, while maintaining the structural integrity of the display 10. The thickness of the transparent layer 14 (as viewed from the side as viewed in Figure 3) may be selected in order to provide a maximum distance between the light source 11 and the semi-transparent layer 12, the maximum distance being selected such that light emitted by the light source 11, in use, is transmitted through the semi-transparent layer 12. The transparent layer 14 may have a minimum thickness of at least 1 mm or at least 2 mm. The transparent layer 14 may have a maximum thickness of up to 5 mm or up to 10 mm.

In some embodiments, the transparent layer 14 may be curved at least in part (as viewed from the side as viewed in Figure 3). The transparent layer 14 may comprise a concave polycarbonate shell. In some embodiments, the transparent layer 14 may be planar or convex. In some embodiments, the transparent layer 14 may be formed of any suitable plastic. The transparent layer 14 provides an efficient and cost-effective means of producing the semi-transparent layer 12 by disposing the semi-transparent layer 12 on a surface of the transparent layer 14 (e.g. as described in further detail below).

In the examples and embodiments of Figures 1-3, the semi-transparent layer 12 over-lays the entire surface area of the light source 11. In some embodiments, the semi-transparent layer 12 may only over-lay a portion of the surface area of the light source 11. In embodiments in which the light source 11 comprises an electronic screen, for example, the semi-transparent layer 12 may only over-lay photo-active portions of the electronic screen.

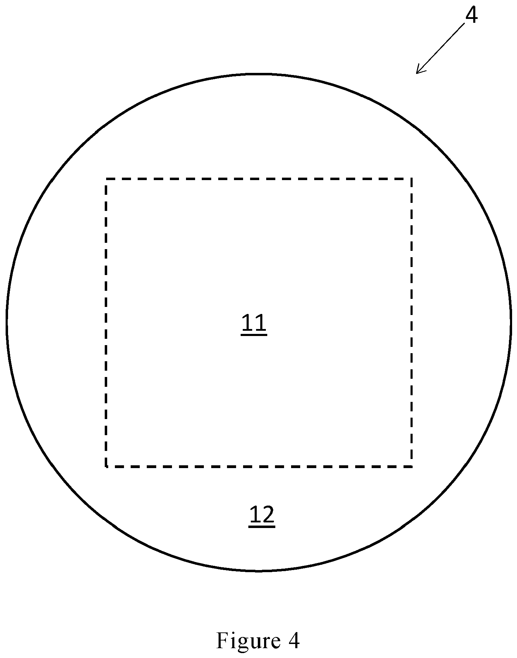

Figure 4 shows a schematic front view of a controller 4, for use in a wet environment such as an ablutionary setting, according to another embodiment. The controller 4 of Figure 4 has features in common with the controller 1 of Figure 1, the controller 2 of Figure 2 and the controller 3 of Figure 3. Like reference numerals will be used to refer to like features. Figure 4 is merely illustrative and is not indicative of the relative sizes of the components or of the relative spacing between components of the controller 4.

A continuous outer edge of the semi-transparent layer 12 is indicated by the solid line in Figure 4 and a continuous outer edge of the light source 11 is indicated by the broken line in Figure 4. The shape of the continuous outer edge of the semi-transparent layer 12 is circular and the shape of the continuous outer edge of the light source 11 is square. In other embodiments, the shapes of the continuous outer edges of the semi-transparent layer 12 and the light source 11 may be any shape such that the shapes are different. In other embodiments, the shapes are the same.

The semi-transparent layer 12 of any of the above described embodiments may be black, to absorb light transmitted towards the light source 11, such as ambient indoor lighting, or white to reflect light transmitted towards the light source 11. In some embodiments, the semi-transparent layer 12 may be any color suitable to absorb and/or reflect light.

The controller 1, 2, 3, 4 of any of the above described embodiments may further comprise a housing. The housing may contain electronic components which are used to produce a control signal in response to an input to the controller 1, 2, 3, 4, as well as provide power to the light source 11 and the rest of the controller 1, 2, 3, 4. The controller 1, 2, 3, 4 may further comprises a seal to prevent water ingress in to the housing, thereby protecting the electronic components. In some embodiments, the controller 1, 2, 3, 4 does not comprise a housing and is instead configured to be installed in a recess in a structure within a wet environment such as an ablutionary setting, for example a recess formed in a bathroom wall. A seal may provide a sealed volume within the recess to house electronic components of the controller 1, 2, 3, 4.

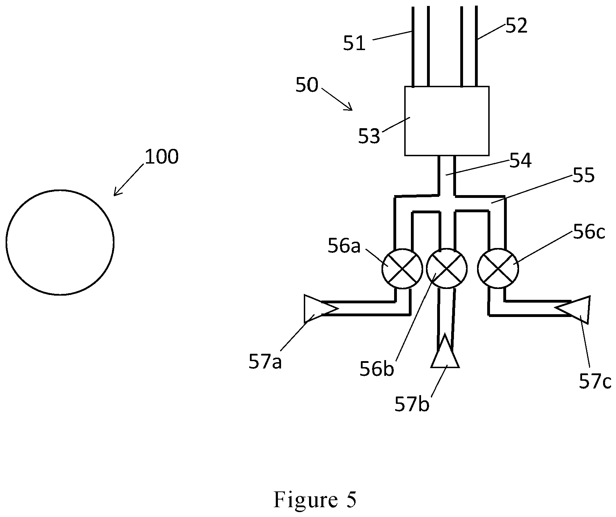

Figure 5 illustrates schematically a fluid delivery system 50, for delivering water to a plurality of fluid delivery devices, according to an embodiment. The fluid delivery system 50 comprises a fluid delivery device 57a, 57b, 57c and a controller 100, which may be a controller according to any of the above-described embodiments (e.g. the controllers 1, 2, 3, 4). The controller 100 is operable to control one or more characteristics of the fluid delivered, in use, by the fluid delivery device 57a, 57b, 57c.

The fluid delivery system 50 comprises a first supply pipe 51 and a second supply pipe 52. The first supply pipe 51 and the second supply pipe 52 each convey water to a thermostatic mixer valve 53. The first supply pipe 51 carries hot water and the second supply pipe 52 carries cold water or *vice versa.*

An outlet pipe 54 carries water at a user-desired temperature from the thermostatic mixer valve 53 and communicates with a manifold 55 having three branches.

Each branch of the manifold 55 has a solenoid shut-off valve 56a, 56b, 56c. A fluid delivery device 57a, 57b, 57c is disposed downstream of each solenoid shut-off valve 56a, 56b, 56c. The solenoid shut-off valves 56a, 56b, 56c are each operable to permit or prevent flow to the fluid delivery device 57a, 57b, 57c downstream thereof.

The fluid delivery devices 57a, 57b, 57c may for example include a plurality of shower sprayheads and/or may include a plurality of spray modes, e.g. provided by different sets of nozzles, from a shower sprayhead.

Operation of the fluid delivery system 50 is controlled by the controller 100. The controller 100 is operably connected, either by a wired connection or a wireless connection, to the thermostatic mixer valve 53. In use, a user activates the fluid delivery system 50 by means an input of the controller 100. For example, where the light source 11 comprises an electronic screen, the light source 11 may display an icon representing an option to activate the fluid delivery system 50. The user may select the icon by means of a touching motion using the touch interface 13. In response, the controller 100 may send a control signal to the thermostatic mixer valve 53 to deliver water to the manifold 55. The light source 11 may subsequently display information indicative of the temperature of water delivered to the manifold 55. To deactivate the fluid delivery system 50, the user may select an appropriate icon displayed by the light source 11 using the touch interface 13. In response, the controller 10 sends a control signal to the thermostatic mixer valve 53 to stop the delivery of water to the manifold 55, and the power supply to the light source 11 is interrupted. The light source 11 subsequently appears hidden.

The controller 100 is also operably connected, either by a wired connection or a wireless connection, to each of the solenoid shut-off valves 56a, 56b, 56c. In use, where the light source 11 comprises an electronic screen for example, the light source 11 may display an icon representing an option to activate each of the fluid delivery devices 57a, 57b, 57c. In response to a user selecting one of the icons, using the touch interface 13 as described above, the controller 100 may send a control signal to the corresponding solenoid shut-off valve 56a, 56b, 56c to permit flow to the corresponding fluid delivery device 57a, 57b, 57c. The user may then select a further icon displayed by the light source 11 to deactivate the fluid delivery device 57a, 57b, 57c.

In some embodiments, the light source 11 of the controller 100 is configured to display information relating to the temperature of water delivered to the manifold 55. For example, in embodiments in which the light source 11 comprises and electronic screen, the electronic screen may be configured to display the temperature of water delivered to the manifold 55 in plain text. In other embodiments in which the light source 11 comprises one or more LEDs, the LED(s) may be configured to illuminate with a first color, for example blue, when the temperature of the water is below a target temperature, and illuminate with a second color, for example red, when the temperature of the water reaches the target temperature. In some embodiments, the light source 11 is configured to display information relating to a currently selected fluid delivery device 57a, 57b, 57c. In some embodiments, the light source 11 may be configured to display information relating to the pressure of water being delivered by the fluid delivery devices 57a, 57b, 57c.

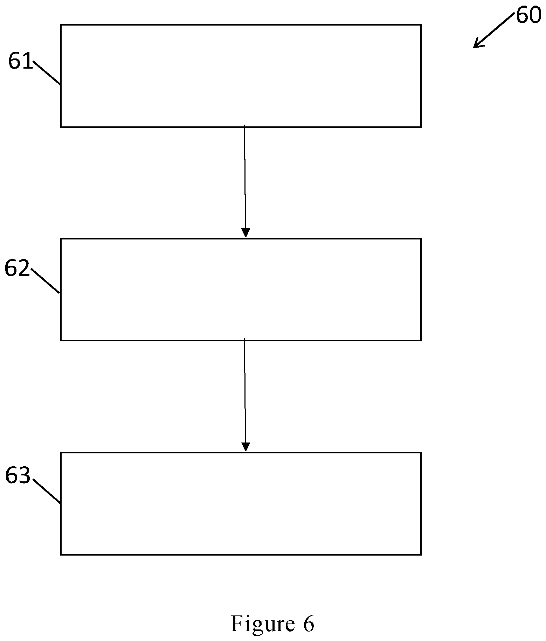

Figure 6 illustrates a method 60 of manufacturing a controller for use in a wet environment such as an ablutionary setting, according to an example helpful to understand the invention but not covered by the claims. The controller comprises a display for displaying information related to the operation of a fluid delivery system. The display comprises a light source, a semi-transparent layer, and a touch interface. The method 60 comprises: providing 61 a light source, a semi-transparent layer, and a touch interface. The method 60 further comprises configuring 63 the light source and the semi-transparent layer such that the semi-transparent layer absorbs or reflects light transmitted towards the light source and allows light transmitted from the light source to be transmitted from the display, such that the light source appears hidden when light is not transmitted from the light source.

The method 60 may further comprise arranging 62 the touch interface between the light source and the semi-transparent layer, or arranging the semi-transparent layer between the light source and the touch interface. The method 60 may further comprise forming the semi-transparent layer integrally with the touch interface.

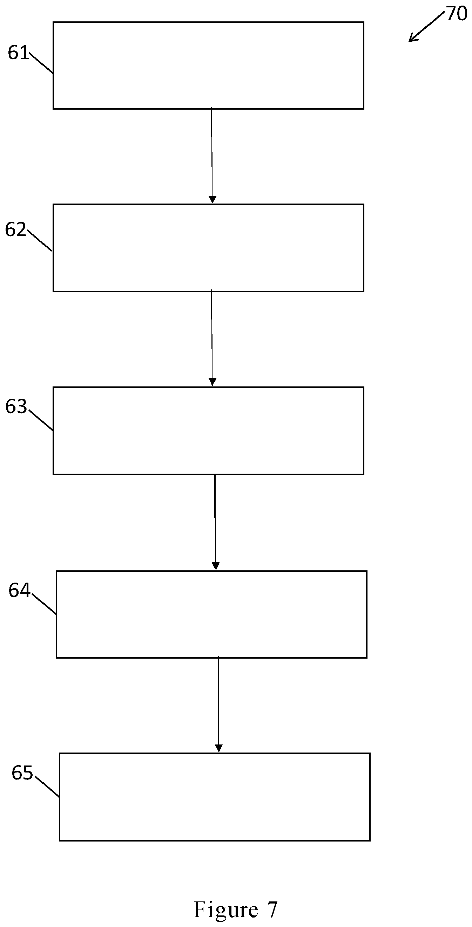

Figure 7 illustrates a method 70 of manufacturing a controller according to an embodiment. The method 70 of Figure 7 has steps in common with the method 60 of Figure 6. Like reference numerals are used to refer to like steps. The method 70 further comprises providing 64 a transparent layer and forming 65 the semi-transparent layer integrally with the transparent layer.

The controller of either of the methods 60, 70 of Figures 6 and 7 may comprise any one of the controllers 1, 2, 3, 4 described above.

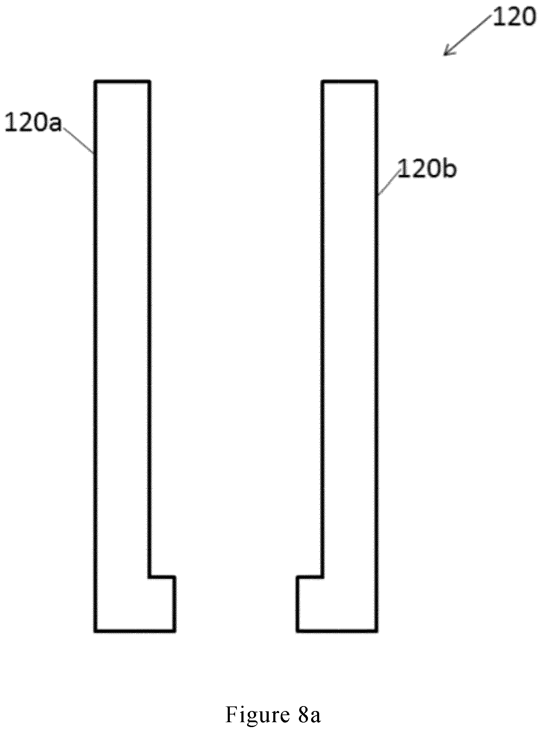

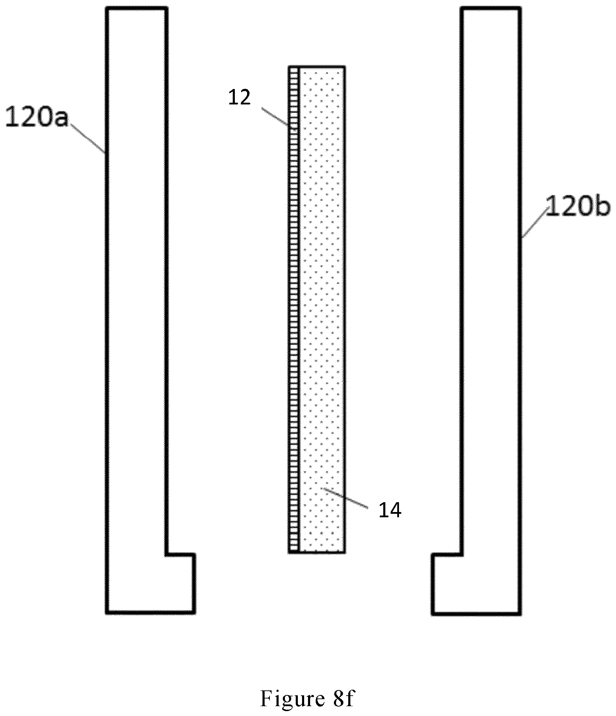

Figures 8a-f show a schematic representation of a method according to an embodiment. The method may be described as an in-mold labelling (IML) process. The method may be used to manufacture a controller according to an embodiment described herein.

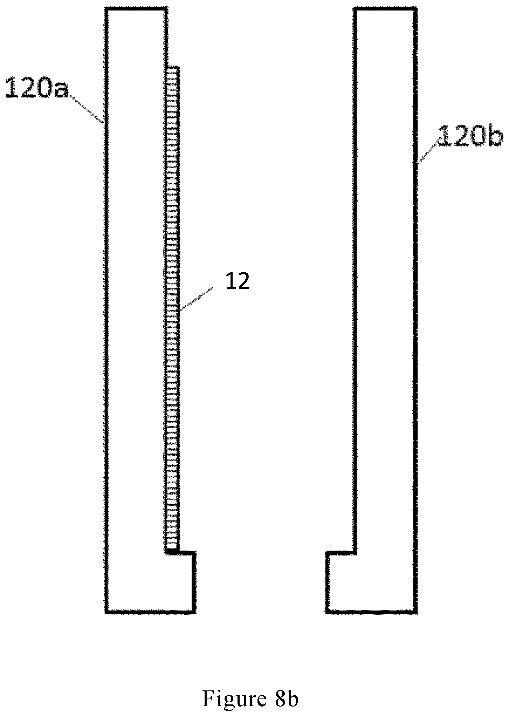

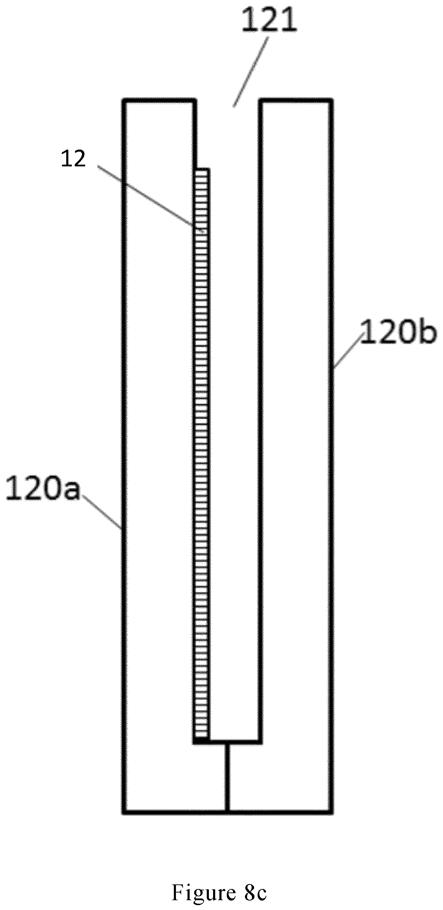

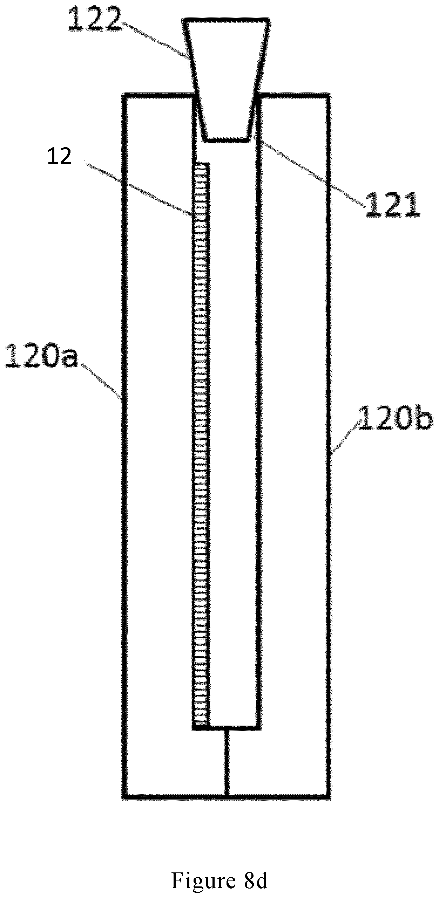

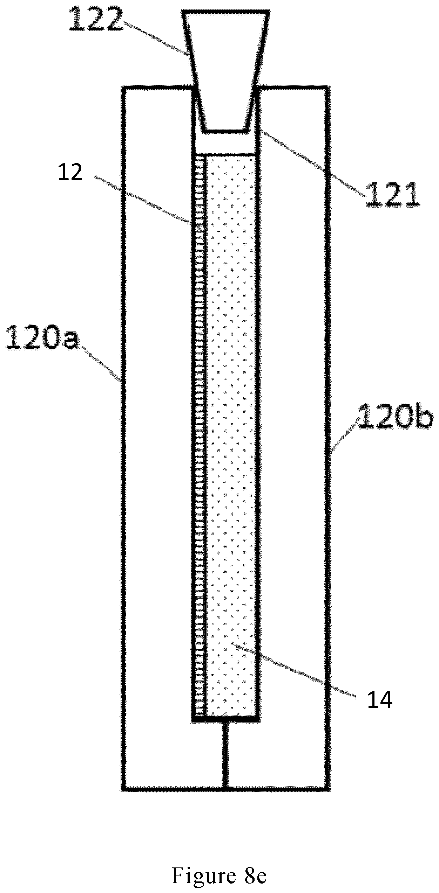

The method begins by providing a mold 120 as shown in Figure 8a. The mold comprises a first part 120a and a second part 120b. The first part 120a and the second part 120b are attachable to one another. A semi-transparent layer 12 having the form of a film is inserted in to the mold 120 as shown in Figure 8b. The semi-transparent layer 12 may be secured to the first part 120a of the mold 120 to hold it in place during the molding process. The first part 120a and the second part 120b of the mold 120 are then attached to one another as shown in Figure 8c. An opening 121 is provided at the top of the mold 120 when the first and second parts 120a, 120b are attached to one another. A nozzle 122 is then inserted in to the opening 121, as shown in Figure 8d. Molten material, such as molten polycarbonate, poly methyl methacrylate (PMMA) or any other suitable plastics material, is then injected in to the mold 120 via the nozzle 122. This forms the transparent layer 14 as shown in Figure 8e. The nozzle 122 is then removed from the opening 121, the first and second parts 120a, 120b of the mold 120 are detached from one another, and the transparent layer 14 and the semi-transparent layer 12 are removed from the mold 120 as a single piece.

Alternatively, the semi-transparent layer 12 may be secured in the second part 120b of the mold 120 during the in-mold labelling process.

The controllers disclosed herein provide a hidden until lit effect under ambient lighting conditions, which may sometimes be termed a dead front effect. As will be appreciated, the provision of this effect may depend *inter alia* upon balancing the brightness of the light source with the transmissivity (opacity), thickness and proximity of the semi-transparent layer.

It will be understood that various modifications and improvements can be made without departing from the scope of the appeded claims.

## Claims

1. A digital shower controller (1, 2, 3, 4), comprising a display (10) configured to display information related to the operation of a shower, the display (10) comprising:
a light source (11);
a touch interface (13) configured to provide an input to the digital shower controller (1, 2, 3, 4);
**characterized in that**
the display (10) further comprises a semi-transparent layer (12) and a transparent layer (14);
**in that** the light source (11) and the semi-transparent layer (12) are configured such that the semi-transparent layer (12) absorbs or reflects light transmitted towards the light source (11) and allows light transmitted from the light source (11) to be transmitted from the display (10), such that the light source (11) appears hidden when light is not transmitted from the light source (11);
and **in that** the semi-transparent layer (12) is formed integrally with the transparent layer (14).

2. The digital shower controller (1, 2, 3, 4) of claim 1, wherein the touch interface (13) is arranged between the light source (11) and the semi-transparent layer (12), or the semi-transparent layer (12) is arranged between the light source (11) and the touch interface (13).

3. The digital shower controller (1, 2, 3, 4) of claim 1 or claim 2, wherein the semi-transparent layer (12) is integrally formed with the touch interface (13).

4. The digital shower controller (1, 2, 3, 4) of claim 1, claim 2 or claim 3, wherein the semi-transparent layer (12) comprises an opacity selected such that ambient indoor lighting is reflected or absorbed by the semi-transparent layer (12) and light transmitted from the light source (11) is transmitted through the semi-transparent layer (12), and/or wherein the light source (11) is configured to transmit light having an intensity measured at the semi-transparent layer (12) greater than an intensity of ambient indoor lighting measured at the semi-transparent layer (12), and/or wherein a maximum distance between the light source (11) and the semi-transparent layer (12) is such that light transmitted from the light source (11) is transmitted through the semi-transparent layer (12).

5. The digital shower controller (1, 2, 3, 4) of any one of the preceding claims, wherein the touch interface (13) is selected from the group consisting of a capacitive touch interface, a resistive touch interface, a surface acoustic wave interface, and an infrared interface, optionally wherein the touch interface (13) is a capacitive touch interface and the capacitive touch interface comprises an indium tin oxide layer.

6. The digital shower controller (1, 2, 3, 4) of any one of the preceding claims, wherein the transparent layer (14) is arranged between the light source (11) and the touch interface (13), or between the touch interface (13) and the semi-transparent layer (12), or between the light source (11) and the semi-transparent layer (12).

7. The digital shower controller (1, 2, 3, 4) of any one of the preceding claims, wherein the semi-transparent layer (12) is black or white.

8. The digital shower controller (1, 2, 3, 4) of any one of the preceding claims, wherein a shape of a continuous outer edge of the semi-transparent layer (12) as viewed in a direction extending from the semi-transparent layer (12) toward the light source (11) is different from a shape of a continuous outer edge of the light source (11) as viewed in the same direction.

9. The digital shower controller (1, 2, 3, 4) of any one of the preceding claims, wherein the light source (11) comprises an electronic screen.

10. The digital shower controller (1, 2, 3, 4) of claim 9, wherein the electronic screen comprises a liquid-crystal display, optionally wherein the light source (11) comprises one or more LEDs behind the liquid-crystal display to provide backlighting, or wherein the electronic screen comprises an LED screen.

11. The digital shower controller (1, 2, 3, 4) of any one of the preceding claims, wherein the light source (11) comprises an LED.

12. A shower (50) comprising:
a fluid delivery device (57a, 57b, 57c); and
the digital shower controller (100) of any preceding claim;
wherein the digital shower controller (100) is operable to control one or more characteristics of fluid delivered, in use, by the shower (50).

13. The shower (50) of claim 12, further comprising a valve (56a, 56b, 56c) operable to control flow of fluid to the fluid delivery device (57a, 57b, 57c), wherein the digital shower controller (100) is operably connected to the valve (56a, 56b, 56c), and/or further comprising a plurality of fluid delivery devices (57a, 57b, 57c), wherein the digital shower controller (100) is configured to permit a user to select any combination of one or more of the fluid delivery devices (57a, 57b, 57c).

14. A method (60, 70) of manufacturing a digital shower controller (1, 2, 3, 4), the digital shower controller (1, 2, 3, 4) comprising a display (10) configured to display information related to the operation of a shower and for providing an input to the digital shower controller (1, 2, 3, 4), the display (10) comprising a light source (11), a semi-transparent layer (12), and a touch interface (13), the method (60, 70) comprising:
providing (61) a light source (11), a semi-transparent layer (12), and a touch interface (13); and
configuring (63) the light source (11) and the semi-transparent layer (12) such that the semi-transparent layer (12) absorbs or reflects light transmitted towards the light source (11) and allows light transmitted from the light source (11) to be transmitted from the display (10), such that the light source (11) appears hidden when light is not transmitted from the light source (11);
wherein the display (10) further comprises a transparent layer (14), the method (60, 70) further comprising providing (64) a transparent layer (14) and forming (65) the semi-transparent layer (12) integrally with the transparent layer (14).

## Patentansprüche

1. Digitale Duschsteuereinheit (1, 2, 3, 4), die eine Anzeige (10) umfasst, die dazu konfiguriert ist, Informationen in Bezug auf den Betrieb einer Dusche anzuzeigen, wobei die Anzeige (10) umfasst:
eine Lichtquelle (11);
eine Touch-Bedienoberfläche (13), die dazu konfiguriert ist, eine Eingabe in die digitale Duschsteuereinheit (1, 2, 3, 4) bereitzustellen;
**dadurch gekennzeichnet, dass**
die Anzeige (10) weiter eine halbtransparente Schicht (12) und eine transparente Schicht (14) umfasst;
dass die Lichtquelle (11) und die halbtransparente Schicht (12) derart konfiguriert sind, dass die halbtransparente Schicht (12) in Richtung der Lichtquelle (11) übertragenes Licht absorbiert oder reflektiert, und erlaubt, dass Licht, das von der Lichtquelle (11) übertragen werden soll, von der Anzeige (10) derart übertragen wird, dass die Lichtquelle (11) verborgen erscheint, wenn Licht nicht von der Lichtquelle (11) übertragen wird;
und dass die halbtransparente Schicht (12) in einem Stück mit der transparenten Schicht (14) gebildet ist.

2. Digitale Duschsteuereinheit (1, 2, 3, 4) nach Anspruch 1, wobei die Touch-Bedienoberfläche (13) zwischen der Lichtquelle (11) und der halbtransparenten Schicht (12) eingerichtet ist oder die halbtransparente Schicht (12) zwischen der Lichtquelle (11) und der Touch-Bedienoberfläche (13) eingerichtet ist.

3. Digitale Duschsteuereinheit (1, 2, 3, 4) nach Anspruch 1 oder Anspruch 2, wobei die halbtransparente Schicht (12) aus einem Stück mit der Touch-Bedienoberfläche (13) gebildet ist.

4. Digitale Duschsteuereinheit (1, 2, 3, 4) nach Anspruch 1, Anspruch 2 oder Anspruch 3, wobei die halbtransparente Schicht (12) eine Opazität umfasst, die derart ausgewählt ist, dass Umgebungsinnenlicht von der halbtransparenten Schicht (12) reflektiert oder absorbiert wird, und Licht, das von der Lichtquelle (11) übertragen wird, durch die halbtransparente Schicht (12) übertragen wird, und/oder wobei die Lichtquelle (11) dazu konfiguriert ist, Licht, das eine an der halbtransparenten Schicht (12) gemessene Intensität aufweist, die größer als die an der halbtransparenten Schicht (12) gemessene Intensität der Umgebungsinnenlicht ist, zu übertragen, und/oder wobei ein maximaler Abstand zwischen der Lichtquelle (11) und der halbtransparenten Schicht (12) derart ist, dass Licht, das von der Lichtquelle (11) übertragen wird, durch die halbtransparente Schicht (12) übertragen wird.

5. Digitale Duschsteuereinheit (1, 2, 3, 4) nach einem der vorstehenden Ansprüche, wobei die Touch-Bedienoberfläche (13) aus der Gruppe ausgewählt ist, die aus einer kapazitiven Touch-Bedienoberfläche, einer resistiven Touch-Bedienoberfläche, einer Oberflächenschallwellen-Touch-Bedienoberfläche und einer Infrarot-Bedienoberfläche besteht, wobei die Touch-Bedienoberfläche (13) optional eine kapazitive Touch-Bedienoberfläche ist und die kapazitive Touch-Bedienoberfläche eine Indium-ZinnOxidschicht umfasst.

6. Digitale Duschsteuereinheit (1, 2, 3, 4) nach einem der vorstehenden Ansprüche, wobei die transparente Schicht (14) zwischen der Lichtquelle (11) und der Touch-Bedienoberfläche (13) oder zwischen der Touch-Bedienoberfläche (13) und der halbtransparenten Schicht (12) oder zwischen der Lichtquelle (11) und der halbtransparenten Schicht (12) eingerichtet ist.

7. Digitale Duschsteuereinheit (1, 2, 3, 4) nach einem der vorstehenden Ansprüche, wobei die halbtransparente Schicht (12) schwarz oder weiß ist.

8. Digitale Duschsteuereinheit (1, 2, 3, 4) nach einem der vorstehenden Ansprüche, wobei sich die Form einer durchgehenden Außenkante der halbtransparenten Schicht (12) in einer Richtung betrachtet, die sich von der halbtransparenten Schicht (12) in Richtung der Lichtquelle (11) erstreckt, von einer Form einer durchgehenden Außenkante der Lichtquelle (11) in der gleichen Richtung betrachtet unterscheidet.

9. Digitale Duschsteuereinheit (1, 2, 3, 4) nach einem der vorstehenden Ansprüche, wobei die Lichtquelle (11) einen elektronischen Bildschirm umfasst.

10. Digitale Duschsteuereinheit (1, 2, 3, 4) nach Anspruch 9, wobei der elektronische Bildschirm eine Flüssigkristallanzeige umfasst, wobei die Lichtquelle (11) optional eine oder mehrere LEDs hinter der Flüssigkristallanzeige umfasst, um eine Hintergrundbeleuchtung bereitzustellen, oder wobei der elektronische Bildschirm einen LED-Bildschirm umfasst.

11. Digitale Duschsteuereinheit (1, 2, 3, 4) nach einem der vorstehenden Ansprüche, wobei die Lichtquelle (11) eine LED umfasst.

12. Dusche (50), umfassend:
eine Fluidabgabevorrichtung (57a, 57b, 57c); und
die digitale Duschsteuereinheit (100) nach einem vorstehenden Anspruch;
wobei die digitale Duschsteuereinheit (100) betreibbar ist, um eine oder mehrere Eigenschaften von bei Verwendung durch die Dusche (50) abgegebenem Fluid zu steuern.

13. Dusche (50) nach Anspruch 12, die weiter ein Ventil (56a, 56b, 56c) umfasst, das betreibbar ist, um den Fluidstrom zu der Fluidabgabevorrichtung (57a, 57b, 57c) zu steuern, wobei die digitale Duschsteuereinheit (100) mit dem Ventil (56a, 56b, 56c) wirkverbunden ist, und/oder weiter eine Vielzahl von Fluidabgabevorrichtungen (57a, 57b, 57c) umfasst, wobei die digitale Duschsteuereinheit (100) dazu konfiguriert ist, es einem Benutzer zu erlauben, eine beliebige Kombination aus einer oder mehreren der Fluidabgabevorrichtungen (57a, 57b, 57c) auszuwählen.

14. Verfahren (60, 70) zum Herstellen einer digitalen Duschsteuereinheit (1, 2, 3, 4), wobei die digitale Duschsteuereinheit (1, 2, 3, 4) eine Anzeige (10) umfasst, die dazu konfiguriert ist, Informationen in Bezug auf den Betrieb einer Dusche anzuzeigen und eine Eingabe in die digitale Duschsteuereinheit (1, 2, 3, 4) bereitzustellen, wobei die Anzeige (10) eine Lichtquelle (11), eine halbtransparente Schicht (12) und eine Touch-Bedienoberfläche (13) umfasst, wobei das Verfahren (60, 70) umfasst:
Bereitstellen (61) einer Lichtquelle (11), einer halbtransparenten Schicht (12) und einer Touch-Bedienoberfläche (13); und
Konfigurieren (63) der Lichtquelle (11) und der halbtransparenten Schicht (12) derart, dass die halbtransparente Schicht (12) in Richtung der Lichtquelle (11) übertragenes Licht absorbiert oder reflektiert, und es Licht, das von der Lichtquelle (11) übertragen wird, erlaubt, von der Anzeige (10) derart übertragen zu werden, dass die Lichtquelle (11) verborgen erscheint, wenn Licht nicht von der Lichtquelle (11) übertragen wird;
wobei die Anzeige (10) weiter eine transparente Schicht (14) umfasst, das Verfahren (60, 70) weiter das Bereitstellen (64) einer transparenten Schicht (14) und das Bilden (65) der halbtransparenten Schicht (12) in einem Stück mit der transparenten Schicht (14) umfasst.

## Revendications

1. Dispositif de commande de douche numérique (1, 2, 3, 4), comprenant un écran (10) configuré pour afficher des informations relatives au fonctionnement d'une douche, l'écran (10) comprenant :
une source de lumière (11) ;
une interface tactile (13) configurée pour fournir une entrée au dispositif de commande de douche numérique (1, 2, 3, 4) ;
**caractérisé en ce que**
l'écran (10) comprend en outre une couche semi-transparente (12) et une couche transparente (14) ;
**en ce que** la source de lumière (11) et la couche semi-transparente (12) sont configurées de telle sorte que la couche semi-transparente (12) absorbe ou réfléchisse la lumière transmise vers la source de lumière (11) et permette à la lumière transmise par la source de lumière (11) d'être transmise par l'écran (10), de telle sorte que la source de lumière (11) apparaisse cachée lorsque la lumière n'est pas transmise par la source de lumière (11) ;
et **en ce que** la couche semi-transparente (12) est formée d'un seul tenant avec la couche transparente (14).

2. Dispositif de commande de douche numérique (1, 2, 3, 4) selon la revendication 1, dans lequel l'interface tactile (13) est agencée entre la source de lumière (11) et la couche semi-transparente (12), ou la couche semi-transparente (12) est agencée entre la source de lumière (11) et l'interface tactile (13).

3. Dispositif de commande de douche numérique (1, 2, 3, 4) selon la revendication 1 ou la revendication 2, dans lequel la couche semi-transparente (12) est formée d'un seul tenant avec l'interface tactile (13).

4. Dispositif de commande de douche numérique (1, 2, 3, 4) selon la revendication 1, la revendication 2 ou la revendication 3, dans lequel la couche semi-transparente (12) comprend une opacité sélectionnée de telle sorte que l'éclairage intérieur ambiant soit réfléchi ou absorbé par la couche semi-transparente (12) et que la lumière transmise par la source de lumière (11) soit transmise à travers la couche semi-transparente (12), et/ou dans lequel la source de lumière (11) est configurée pour transmettre une lumière présentant une intensité mesurée au niveau de la couche semi-transparente (12) supérieure à une intensité d'éclairage intérieur ambiant mesurée au niveau de la couche semi-transparente (12), et/ou dans lequel une distance maximale entre la source de lumière (11) et la couche semi-transparente (12) est telle que la lumière transmise depuis la source de lumière (11) est transmise à travers la couche semi-transparente (12).

5. Dispositif de commande de douche numérique (1, 2, 3, 4) selon l'une quelconque des revendications précédentes, dans lequel l'interface tactile (13) est sélectionnée dans le groupe consistant en une interface tactile capacitive, une interface tactile résistive, une interface à ondes acoustiques de surface et une interface infrarouge, facultativement dans lequel l'interface tactile (13) est une interface tactile capacitive et l'interface tactile capacitive comprend une couche d'oxyde d'étain-indium.

6. Dispositif de commande de douche numérique (1, 2, 3, 4) selon l'une quelconque des revendications précédentes, dans lequel la couche transparente (14) est agencée entre la source de lumière (11) et l'interface tactile (13), ou entre l'interface tactile (13) et la couche semi-transparente (12), ou entre la source de lumière (11) et la couche semi-transparente (12).

7. Dispositif de commande de douche numérique (1, 2, 3, 4) selon l'une quelconque des revendications précédentes, dans lequel la couche semi-transparente (12) est noire ou blanche.

8. Dispositif de commande de douche numérique (1, 2, 3, 4) selon l'une quelconque des revendications précédentes, dans lequel une forme d'un bord extérieur continu de la couche semi-transparente (12) telle que vue dans une direction s'étendant de la couche semi-transparente (12) vers la source de lumière (11) est différente d'une forme d'un bord extérieur continu de la source de lumière (11) telle que vue dans la même direction.

9. Dispositif de commande de douche numérique (1, 2, 3, 4) selon l'une quelconque des revendications précédentes, dans lequel la source de lumière (11) comprend un écran électronique.

10. Dispositif de commande de douche numérique (1, 2, 3, 4) selon la revendication 9, dans lequel l'écran électronique comprend un affichage à cristaux liquides, facultativement dans lequel la source de lumière (11) comprend une ou plusieurs LED derrière l'affichage à cristaux liquides pour fournir un rétroéclairage, ou dans lequel l'écran électronique comprend un écran LED.

11. Dispositif de commande de douche numérique (1, 2, 3, 4) selon l'une quelconque des revendications précédentes, dans lequel la source de lumière (11) comprend une LED.

12. Douche (50) comprenant :
un dispositif de distribution de fluide (57a, 57b, 57c) ; et
le dispositif de commande de douche numérique (100) selon une quelconque revendication précédente ;
dans lequel le dispositif de commande de douche numérique (100) peut fonctionner pour commander une ou plusieurs caractéristiques du fluide distribué, lors de l'utilisation, par la douche (50).

13. Douche (50) selon la revendication 12, comprenant en outre une vanne (56a, 56b, 56c) pouvant fonctionner pour commander le débit de fluide vers le dispositif de distribution de fluide (57a, 57b, 57c), dans laquelle le dispositif de commande de douche numérique (100) est raccordé de manière fonctionnelle à la vanne (56a, 56b, 56c), et/ou comprenant en outre une pluralité de dispositifs de distribution de fluide (57a, 57b, 57c), dans lequel le dispositif de commande de douche numérique (100) est configuré pour permettre à un utilisateur de sélectionner n'importe quelle combinaison d'un ou plusieurs des dispositifs de distribution de fluide (57a, 57b, 57c).

14. Procédé (60, 70) de fabrication d'un dispositif de commande de douche numérique (1, 2, 3, 4), le dispositif de commande de douche numérique (1, 2, 3, 4) comprenant un écran (10) configuré pour afficher des informations relatives au fonctionnement d'une douche et pour fournir une entrée au dispositif de commande de douche numérique (1, 2, 3, 4), l'écran (10) comprenant une source de lumière (11), une couche semi-transparente (12) et une interface tactile (13), le procédé (60, 70) comprenant :
la fourniture (61) d'une source de lumière (11), d'une couche semi-transparente (12) et d'une interface tactile (13) ; et
la configuration (63) de la source de lumière (11) et de la couche semi-transparente (12) de telle sorte que la couche semi-transparente (12) absorbe ou réfléchisse la lumière transmise vers la source de lumière (11) et permette à la lumière transmise par la source de lumière (11) d'être transmise par l'écran (10), de telle sorte que la source de lumière (11) apparaisse cachée lorsque la lumière n'est pas transmise par la source de lumière (11) ;
dans lequel l'écran (10) comprend en outre une couche transparente (14), le procédé (60, 70) comprenant en outre la fourniture (64) d'une couche transparente (14) et la formation (65) de la couche semi-transparente (12) d'un seul tenant avec la couche transparente (14).
